# EUROPÄISCHE PATENTANMELDUNG

(11) **EP 0 890 484 A2**
(43) Veröffentlichungstag der Anmeldung: **13.01.1999**
(21) Anmeldenummer: 98112534.7
(22) Anmeldetag: 07.07.1998
(51) Int. Cl.: B60R 16/02

(54) **Brennkraftmaschine mit von einer Zentraleinheit gesteuerten elektronischen Komponenten**

(30) Priorität: 12.07.1997 DE 19729959
(71) Anmelder: TEMIC TELEFUNKEN microelectronic GmbH, 74072 Heilbronn (DE); DAIMLER-BENZ AKTIENGESELLSCHAFT, 70567 Stuttgart (DE)
(72) Erfinder: Hettich, Gerhard, Dr., 90599 Dietenhofen (DE); Schenk, Jürgen, 73095 Albershausen (DE)
(74) Vertreter: Maute, Hans-Jürgen, Dipl.-Ing.

(57) **Zusammenfassung**

Die Erfindung betrifft eine Brennkraftmaschine mit von einer Zentraleinheit gesteuerten elektronischen Komponenten, bei der elektrische Leitungen als leitfähige Verbindung zur Energieübertragung und Datenübertragung zwischen den elektronischen Komponenten der Brennkraftmaschine möglichst vollständig vermieden werden.

## Beschreibung

Die Erfindung betrifft eine Brennkraftmaschine mit von einer Zentraleinheit gesteuerten elektronischen Komponenten, die zusammen mit der Zentraleinheit in einem metallisch umschlossenen Gehäuseteil der Brennkraftmaschine angeordnet sind.

Moderne Brennkraftmaschinen werden in zunehmenden Maße elektronisch gesteuert und benötigen dazu eine Reihe von elektronischen Komponenten, insbesondere Sensoren, Aktoren und zugehörige Steuergeräte. Derartige Sensoren sind beispielsweise digitale Hallsensoren, mit denen die Umdrehungszahl der Kurbelwelle bestimmt werden kann. Als Beispiel für Aktoren seien elektromagnetische Ventile genannt, mit denen in Kraftstoffinjektoren die Düsennadel gesteuert wird. Die Sensoren und Aktoren sind dabei über Versorgungsleitungen an einer Spannungsquelle angeschlossen und über Steuerleitungen mit einem Steuergerät oder einer Zentraleinheit verbunden. Diese versorgungs - und Steuerleitungen werden gewöhnlich an beiden Enden durch Steckkontakte an den elektronischen Komponenten und an dem Steuergerät bzw. der Zentraleinheit angeschlossen. Bei Kraftfahrzeugen bildet die Gesamtheit der Versorgungs - und Steuerleitungen den sogenannten Kabelbaum.

Der Nachteil derartig aufgebauter Kabelbäume ist die hohe Anzahl von Steckkontakten, die zwischen den elektronischen Komponenten und den elektrischen Leitungen benötigt werden. Diese Steckkontakte stellen die Hauptfehlerquelle bei Fehlfunktionen an Kraftfahrzeugen dar.

Der Erfindung liegt die Aufgabe zugrunde, eine Brennkraftmaschine mit von einer Zentraleinheit gesteuerten elektronischen Komponenten anzugeben, bei der die Anzahl der elektrischen Leitungen und damit der Steckkontakte zwischen den elektronischen Komponenten und dem Steuergerät bzw. der Zentraleinheit der Brennkraftmaschine signifikant reduziert ist.

Diese Aufgabe wird erfindungsgemäß dadurch gelöst, daß die Energieübertragung zu mindestens einem Teil der elektronischen Komponenten kabellos durch elektromagnetische Wellen erfolgt, die In einer Hochfrequenzquelle erzeugt und in einem metallisch umschlossenen Gehäuseteil der Brennkraftmaschine abgestrahlt werden. Dementsprechend weist dieser Teil der elektronischen Komponenten Empfangsvorrichtungen zum Empfang der elektromagnetischen Wellen auf. Die im metallisch umschlossenen Gehäuseteil angeordnete Hochfrequenzquelle kann dabei ein Bestandteil der Zentraleinheit sein.

Der metallisch umschlossene Gehäuseteil der Brennkraftmaschine kann so ausgeformt werden, daß die Feldstärke der elektromagnetischen Welle an den Empfangsvorrichtungen der elektronischen Komponenten hoch ist, d.h. daß sich an den Empfangsvorrichtungen der elektronischen Komponenten Spannungsbäuche im Verlauf der Feldstärke der elektromagnetischen Welle ausbilden.

Ungünstig plazierten elektronischen Komponenten mit hoher Leistungsaufnahme kann innerhalb des metallisch umschlossenen Gehäuseteil die Energie der elektromagnetischen Wellen über Hohlleiter zusätzlich zugeführt werden.

Zu elektronischen Komponenten, die an Stellen innerhalb des metallisch umschlossenen Gehäuseteils der Brennkraftmaschine plaziert sind, an denen sie von den elektromagnetische Wellen nicht erreicht werden und die keinen hohen Leistungsbedarf haben, kann die Energie kabellos über lose transformatorischen Kopplung, wie es beispielsweise aus der DE 39 12 497 bekannt ist, oder mittels induktiver Kopplung übertragen werden.

In einer Weiterbildung der Erfindung können im metallisch umschlossenen Gehäuseteil der Brennkraftmaschine Versorgungsleitungen dadurch vermieden werden, daß lokal vorhandene Potentialgefalle zur Gewinnung elektrischer Energie zur Versorgung elektronischer Komponenten genutzt werden.

In einer vorteilhaften Weiterbildung der Erfindung ist zur Reduzierung von elektrischen Leitungen und Steckkontakten vorgesehen, die elektronischen Komponenten, die Hochfrequenzquelle und die Zentraleinheit mit Vorrichtungen zur drahtlosen Datenübertragung auszustatten. Die drahtlose Datenübertragung zwischen den elektronischen Komponenten, der Hochfrequenzquelle und der Zentraleinheit kann dabei mittels loser transformatorischer Kopplung, und/oder induktiver Kopplung, und/oder IR - Strecken, und/oder Lichtwellenleitern und/oder elektromagnetischen Wechselfeldern geeigneter Frequenz genutzt werden.

Bei einem derartigen Aufbau einer Brennkraftmaschine mit ihren elektronischen Komponenten werden Versorgungs - und Datenleitungen sowie Steckkontakte weitgehend vermieden, wodurch die Störanfälligkeit der Brennkraftmaschine stark reduziert wird. Dabei werden die ohnehin vorhanden, beispielsweise durch den Zylinderkopf oder den Ventildeckel gebildeten, metallisch umschlossenen Gehäuseteile einer Brennkraftmaschine effektiv genutzt.

Im folgenden wird eine erfindungsgemäße Brennkraftmaschine mit von einer Zentraleinheit gesteuerten elektronischen Komponenten anhand von einem Ausführungsbeispiel Im Zusammenhang mit einer Figur dargestellt und erläutert.

Es zeigt:
- Figur: eine schematische Darstellung einer Brennkraftmaschine mit einem durch den Ventildeckel gebildeten metallisch umschlossenen Gehäuseteil

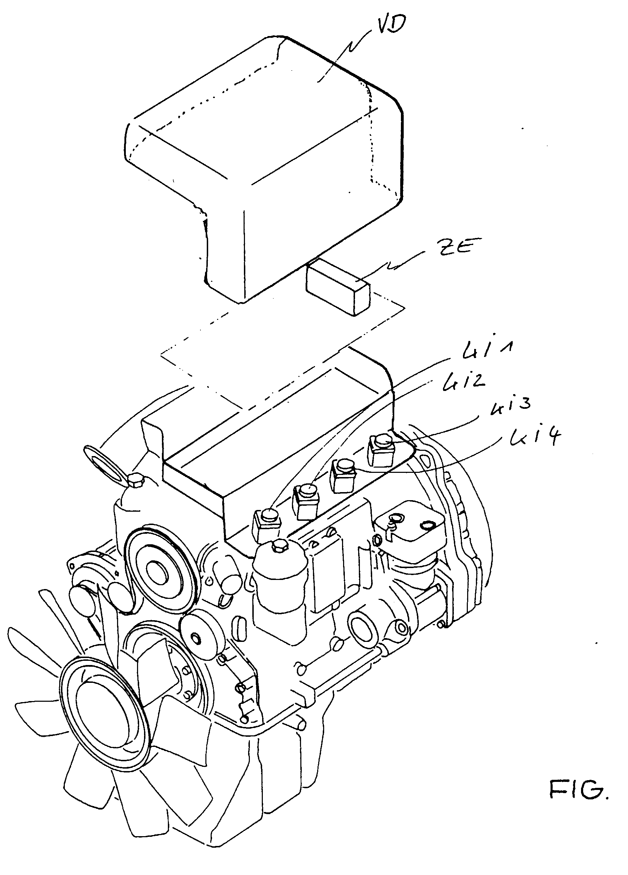

In der Figur ist schematisch eine vierzylindrige Brennkraftmaschine für ein Kraftfahrzeug mit Kraftstoffeinspritzung dargestellt. Der metallische Ventildeckel VD der Brennkraftmaschine umschließt dabei auch die vier Kraftstoffinjektoren KI1 - KI4 und bildet zusammen mit dem Zylinderkopf einen Hohlraum, der vollständig metallisch umschlossenen ist. Entsprechend dem Faradayschen Käfig ist dieser Hohlraum für elektromagnetische Wellen undurchlässig. Neben den Kraftstoffinjektoren KI1 - KI4, die den Kraftstoff mittels elektromagnetischen Ventilen einspritzen, ist als weitere elektronische Komponente in diesem Hohlraum noch eine Vorrichtung zur Bestimmung der Drehzahl der Nockenwellen angeordnet. Die Steuerung dieser elektronischen Komponenten erfolgt über eine Zentraleinheit ZE, die ebenfalls in dem Hohlraum In einem gekapselten Gehäuse angeordnet ist. Die Zentraleinheit ZE wird direkt von der Lichtmaschine der Brennkraftmaschine über eine Versorgungsleitung mit Strom versorgt. Zudem ist die Zentraleinheit ZE über einen CAN - Bus mit weiteren elektrischen Baugruppen des Kraftfahrzeuges verbunden. Die Spannungsversorgung der innerhalb des Hohlraumes befindlichen elektronischen Komponenten erfolgt mittels hochfrequenter elektromagnetischer Wellen. Diese hochfrequenten elektromagnetischen Wellen werden mittels an den elektronischen Komponenten angebrachten, als Antennen ausgebildete Empfangsvorrichtungen aufgenommen und in die von der jeweiligen elektronischen Komponente benötigte Spannung umgewandelt.

Der metallische Ventildeckel VD der Brennkraftmaschine ist dabei so ausgeformt, daß die hochfrequenten elektromagnetischen Wellen im Hohlraum eine stehende Welle bilden. In den sogenannten Spannungsknoten der stehenden Welle ist die Intensität gering, während sie in den sogenannten Spannungsbäuchen hoch ist. Folglich werden elektronische Komponenten wie die elektromagnetischen Ventile der Kraftstoffinjektoren KI1 - KI4 mit ihrer hohen Leistungsaufnahme so im Hohlraum plaziert, daß sich ihre Antennen In den Spannungsbäuchen der stehenden elektromagnetischen Welle befinden.

In Bereichen innerhalb des Hohlraumes, die von den elektromagnetischen Wellen nur unzureichend erreicht werden, kann die Intensität der elektromagnetische Wellen erhöht werden, indem über Hohlleiter zusätzlich elektromagnetische Wellen zugeführt werden.

Die Datenübertragung von der Zentraleinheit ZE zu den Kraftstoffinjektoren KI1 - KI4 erfolgt drahtlos mittels einer Infrarot (IR) - Datenstrecke. Dabei werden die von der Zentraleinheit ZE errechneten drehzahlabhängigen Einspritzzeitpunkte und die Einspritzdauern zu den Kraftstoffinjektoren KI1 - KI4 übertragen. Dazu weisen die Zentraleinheit ZE eine IR - Diode als Sendeelement und die Kraftstoffinjektoren eine Fotozelle als Empfangselement auf. Die Datenübertragung erfolgt dabei direkt oder durch Reflexion an metallischen Teilen des Hohlraumes.

Zur Drehzahlbestimmung der Nockenwellen und der Kurbelwelle ist an der Kurbelwelle eine Spule angebracht, in die magnetisch eine Spannung induziert wird. Mit dieser Spannung wird eine auf der Kurbelwelle befindliche elektrische Schaltung Versorgt. Ein Teil der Schaltung wird durch einen Sender gebildet, der die zur Kurbelwellendrehzahl proportionalen Signalpulse überträgt. Für die Übertragung wird eine Frequenz gewählt, die sich von den Frequenzen anderer elektromagnetischer Strahlungsquellen im Hohlraum unterscheidet. Am Gehäuse der Zentraleinheit ZE ist eine Vorrichtung zum Empfang der Frequenz des Senders angeordnet. Die Zentraleinheit ZE ermittelt aus den übertragenen Signalpulsen die Umdrehungszahl der Kurbelwelle.

Bei der Zielsetzung eine kabellose Brennkraftmaschine zu realisieren, kann durch die Nutzung verschiedener Technologien zumindest auf einen großen Teil der Energie - und Datenübertragungsleitungen verzichtet werden. Dabei stehen für die elektronischen Komponenten mit geringer Leistungsaufnahme die Techniken der losen transformatorischen Kopplung (Transponder) oder der induktiven Kopplung zur Verfügung. Bei einer höheren Leistungsaufnahme der elektronischen Komponenten kann die Energie durch elektromagnetische Wellen geeigneter Wellenlänge übertragen werden. Eine Verminderung von elektrischen Leitungen zur Energie - und Datenübertragung sowie der zugehörigen Steckverbindungen kann bereits durch die Verwendung sogenannter Ringleitungen erzielt werden, über die sowohl die Spannungsversorgung als auch die Datenübertragung, beispielsweise durch die Amplitudenmodulation der Versorgungsspannung, erfolgt (Smart Logic). Derartige Ringleitungen können ebenso mit anderen Datenübertragungstechniken wie IR - Strecken, magnetischer Induktion oder elektromagnetischen Wechselfeldern kombiniert werden.

Die dadurch erreichte Reduzierung von elektrischen Leitungen und der zugehörigen Steckkontakte bewirkt eine deutliche Verminderung der Störanfälligkeit der Brennkraftmaschine.

## Patentansprüche

1. Brennkraftmaschine mit von einer Zentraleinheit (ZE) gesteuerten elektronischen Komponenten, die zusammen mit der Zentraleinheit (ZE) in einem metallisch umschlossenen Gehäuseteil der Brennkraftmaschine angeordnet sind, dadurch gekennzeichnet, daß die Energieübertragung zu mindestens einem Teil der elektronischen Komponenten kabellos durch hochfrequente elektromagnetische Wellen erfolgt, die von einer im metallisch umschlossenen Gehäuseteil der Brennkraftmaschine angeordneten Hochfrequenzquelle erzeugt und abgestrahlt werden, und daß der mindestens eine Teil der elektronischen Komponenten, die Hochfrequenzquelle und die Zentraleinheit (ZE) jeweils mindestens eine Empfangsvorrichtung zum Empfang der elektromagnetischen Wellen aufweisen.

2. Brennkraftmaschine nach Anspruch 1, dadurch gekennzeichnet, daß die Hochfrequenzquelle Teil der Zentraleinheit (ZE) ist.

3. Brennkraftmaschine nach Anspruch 1, dadurch gekennzeichnet, daß der metallisch umschlossene Gehäuseteil der Brennkraftmaschine so ausgeformt ist, daß die Feldstärke der elektromagnetischen Wellen an den Empfangsvorrichtungen der elektronischen Komponenten hoch ist.

4. Brennkraftmaschine nach Anspruch 1, dadurch gekennzeichnet, daß ungünstig plazierten elektronischen Komponenten die elektromagnetische Wellen mittels Hohlleiter zugeführt wird.

5. Brennkraftmaschine nach Anspruch 1, dadurch gekennzeichnet, daß die Energieübertragung zu elektronischen Komponenten mit geringer Leistungsaufnahme kabellos mittels loser transformatorischer Kopplung oder induktiver Kopplung erfolgt.

6. Brennkraftmaschine nach Anspruch 1, dadurch gekennzeichnet, daß unzugänglich angeordnete elektronische Komponenten zur elektrischen Versorgung einen Energiewandler aufweisen, der lokal vorhandene Potentialgefälle zur Stromerzeugung nutzen.

7. Brennkraftmaschine nach einem der vorangegangenen Ansprüche, dadurch gekennzeichnet, daß die Hochfrequenzquelle zur Erzeugung der elektromagnetischen Wellen, die Zentraleinheit (ZE) und die elektronischen Komponenten Vorrichtungen zur drahtlosen Datenübertragung aufweisen.

8. Brennkraftmaschine nach Anspruch 7, dadurch gekennzeichnet, daß die Datenübertragung zwischen den elektronischen Komponenten, der Hochfrequenzquelle und der Zentraleinheit (ZE) drahtlos durch lose transformatorische Kopplung und/oder induktive Kopplung und/oder IR - Strecken und/oder Lichtwellenleiter und/oder elektromagnetische Wechselfelder geeigneter Frequenz erfollgt.
